# EUROPEAN PATENT SPECIFICATION

(11) **EP 1 693 688 B1**
(45) Date of publication and mention of the grant of the patent: **05.08.2009**
(21) Application number: 06250908.8
(22) Date of filing: 21.02.2006
(51) Int. Cl.: G02B 1/00, B29D 11/00, C08L 83/06

(54) **Hydrogel processing**
Hydrogelverarbeitung
Traitement hydrogel

(30) Priority: 22.02.2005 US 62394
(43) Date of publication of application: 23.08.2006
(73) Proprietor: Johnson & Johnson Vision Care, Inc., Jacksonville, FL 32256 (US)
(72) Inventor: Adams, Johathan Patrick, Jacksonville, FL 32258 (US); Lisenby, Paul, Jacksonville, FL 32082 (US); Turner, David, Jacksonville, FL 3223 (US)
(74) Representative: Mercer, Christopher Paul

(56) References cited:
- EP-A- 0 453 231
- EP-A- 0 824 063
- WO-A-01/30558
- WO-A-98/07554
- WO-A-20/04081105
- US-A1- 2004 119 176

## Description

It is well known that contact lenses can be used to improve vision. Various contact lenses have been commercially produced for many years. Early designs of contact lenses were fashioned from hard materials. Although these lenses are still currently used in some applications, they are not suitable for all patients due to poor comfort and relatively low permeability to oxygen. Later developments in the ophthalmic lens field gave rise to soft contact lenses, based upon hydrogels.

Soft hydrogel contact lenses are very popular today. These lenses have higher oxygen permeability and are often more comfortable to wear than contact lenses made of hard materials. Malleable soft contact lenses can be manufactured by forming a lens in a multi-part mold where the combined parts form a topography consistent with a desired final lens.

Multi-part molds used to fashion hydrogels into an ophthalmic lens, can include for example, a first mold portion with a convex surface that corresponds with a back curve of an ophthalmic lens and a second mold portion with a concave surface that corresponds with a front curve of the ophthalmic lens. To prepare a lens using such mold portions, an uncured hydrogel lens formulation is placed between the concave and convex surfaces of the mold portions and subsequently cured. The hydrogel lens formulation may be cured, for example by exposure to either, or both, heat and light. The cured hydrogel forms a lens according to the dimensions of the mold portions.

Following cure, traditional practice dictates that the mold portions are separated such that the lens remains with one of the mold portions. The lens must then be subjected to release and extraction steps. Release becomes necessary because the curing process typically causes the hydrogel to adhere to the mold part. The release step detaches the lens from the remaining mold part. The extraction step removes c (hereinafter referred to as "UCDs") from the lens, which may otherwise affect clinical viability of the lens. Basically, if the UCDs are not extracted from the lens, they may make the lens uncomfortable to wear.

According to prior art, release of an ophthalmic lens from a mold can be facilitated by exposure of the lens to aqueous or saline solutions, which act to swell the lens and loosen adhesion of the lens to the mold. Exposure of the lens to the aqueous or saline solution can additionally serve to extract UCDs and thereby make the lens more comfortable to wear and clinically acceptable.

New developments in the field have led to contact lenses that are made from silicone hydrogels. Known hydration processes using aqueous solutions to effect release and extraction have not been efficient with silicone hydrogel lenses. Consequently, some attempts have been made to release silicone lenses and remove UCDs using organic solvents. Processes have been described in which a lens is immersed in an alcohol (ROH), ketone (RCOR'), aldehyde (RCHO), ester (RCOOR'), amide (RCONR'R") or N-alkyl pyrrolidone for 20 hours-40 hours and in the absence of water, or in an admixture with water as a minor component. (see e.g., U.S. Pat. No. 5,258,490).

However, although some success has been realized with the known processes, the use of highly concentrated organic solutions can present safety hazards; increased risk of down time to a manufacturing line; higher cost of solution; and collateral damage, due to explosion. In addition, a process time of 20-40 hours is not efficient from a commercial manufacturing standpoint.

Therefore, there remains an unmet need for more efficient and safer processes to manufacture a silicone hydrogel lens. This need and others are filled by the present invention.

### SUMMARY OF THE INVENTION

The present invention provides methods and apparatus for processing a silicone hydrogel ophthalmic lens as recited in the claims. A lens forming resin is deposited in a mold part and cured, forming an ophthalmic lens. Curing the resin will typically cause the ophthalmic lens to adhere to the mold part. The lens is released from the mold part by heating a first aqueous solution of about 30% to 70% isopropyl alcohol (IPA) to a temperature of between about 30°C and about 72°C and exposing the ophthalmic lens to the heated first aqueous solution for a first time period of between about 10 and about 60 minutes.

In addition, a second aqueous solution of about 30% to about 70% IPA can be heated to a temperature of between about 30°C and about 72°C. The ophthalmic lens is also exposed to the heated second hydration solution to leach UCDs from the ophthalmic lens. Exposure to the second hydration solution can be for a period of about 10 minutes to about 60 minutes. The lens can also be exposed to a third hydration solution that includes about 100% deionized water in order to rinse the second hydration solution from the lens. The lens can be exposed to the third hydration solution for a time period of about 10 minutes to about 180 minutes.

In some embodiments, the first hydration solution and the second hydration solution are heated to a temperature of about between 30°C and 40°C. In other embodiments, the first aqueous solution and the second aqueous solution are heated to a temperature of about between 41°C and 50°C. Still other embodiments can include a first hydration solution and the second hydration solution heated to a temperature of about between 51°C and 62°C.

In another aspect, in various embodiments the first aqueous solution and the second aqueous solution can include an aqueous solution of between 20% and 30% isopropyl alcohol; between 31 % and 40% isopropyl alcohol; between 41 % and 50% isopropyl alcohol; and between 51 % and 60% isopropyl alcohol.

In still another aspect, in various embodiments, the first time period and the second time period can be a period of between about 10 minutes to 20 minutes each; between about 21 minutes to 30 minutes each, between about 31 minutes to 40 minutes each; between about 41 minutes to 50 minutes; and between about 51 minutes to 60 minutes. In addition, the third period can be a period of between about 10 minutes to 30 minutes.

In some embodiments, the present invention can include apparatus and methods for processing a silicone hydrogel ophthalmic lens that includes depositing a lens forming resin on a lens forming surface of a first mold part and bringing the lens forming mixture into contact with a second lens forming surface of a second mold part, wherein the first mold part and the second mold part are configured to receive each other and a cavity is formed between the first lens forming surface and the second lens forming surface. The cavity defines the shape of ophthalmic lens.

The lens forming resin is exposed to polymerization initiating conditions to form an ophthalmic lens from the lens forming resin. The lens and the mold part are exposed to a first hydration solution comprising 30% to 70% isopropyl alcohol for a period of about 10 minutes to 60 minutes until the lens comprises less than a predetermined threshold of about 300 parts per million of UCDs. In addition, the lens and the mold part are exposed to a second hydration solution of deionized water to rinse the first hydration solution from the lens.

In some embodiments, the polymerization initiating condition is actinic radiation, other embodiments include polymerization initiating conditions that utilize a combination of actinic radiation and heat.

In another aspect, embodiments can include a first hydration solution and the second hydration solution of between 61 % and 70% isopropyl alcohol or a first hydration solution and the second hydration solution of between 71 % and 80% isopropyl alcohol.

In still another aspect, in some embodiments, the first mold part can include a front curve lens surface and the second mold part can include a back curve lens surface so that subsequent to forming the lens, the front curve lens surface can be separated from the back curve lens surface where the cured lens removably adheres to the front curve. Following the second exposure to hydration solution and separation, the front curve of the mold and the lens are additionally subjected to an equilibration solution comprising deionized water.

The first hydration solution is first directed to a lens having a first concentration of UCDs and then directed to a lens having a second concentration of UCDs that is higher than said first concentration of UCDs. Exposing the lens and the mold part to a first hydration solution can include immersing the lens and mold in the first hydration solution. Similarly, exposing the lens and the mold part to a second hydration solution can include immersing the lens and mold in the second hydration solution.

In still another aspect, in some embodiments, the mold is positioned so that gravity acts to facilitate the separation of the lens from the mold surface while the lens is subjected to the aqueous solution.

Some embodiments can further include maintaining the temperature of the hydration solution at a temperature of between about 45°C to 80°C, or between about 70°C to 80°C, while the lens is exposed to the hydration solution.

Still other aspects can include embodiments wherein the second hydration solution additionally comprises one or more of: polyoxyethylene sorbitan monooleate, Tyloxapol, octylphenoxy (oxyethylene) ethanol, amphoteric 10, sorbic acid, DYMED, chlorhexadine gluconate, hydrogen peroxide, thimerosal, polyquad, and polyhexamethylene biguanide.

It is to be understood that embodiments can include apparatus and methods directed to the inventive concepts contained herein.

### DESCRIPTION OF THE DRAWINGS

FIG. 1 illustrates a diagram of an ophthalmic lens mold and lens.
FIG. 2 illustrates a block diagram of exemplary steps that can be utilized to implement some embodiments of the present invention.
FIG. 3 illustrates a diagram of apparatus that can be utilized to implement some embodiments of the present invention.
FIG. 4 illustrates a block diagram of hydration apparatus that can be utilized in some embodiments of the present invention.
FIG. 5 illustrates a chart with results of a first clinical protocol involving hydration with various concentrations of IPA.
FIG. 6 is illustrates extrapolation of data from the clinical protocol of Fig. 5.
FIG. 7 illustrates a graphical representation of hydration solution concentrations suitable for use in the present invention.

### DETAILED DESCRIPTION OF THE INVENTION

The present invention provides methods and apparatus useful to facilitate release of a silicone hydrogel ophthalmic device from a mold portion that is used to form the ophthalmic device and to extract UCDs from the ophthalmic device.

### Overview

Contrary to prior art findings, the present invention teaches that ophthalmic lenses, such as, silicone hydrogel ophthalmic lenses can be effectively released from a mold part and leached of UCDs in a time period conducive to modem manufacturing environments. Specifically, the present invention teaches that by exposing a silicone hydrogel lens to an IPA solution with an elevated temperature of between 30°C and 72°C and a concentration of between 30% and 70% IPA, the lens 100 can be released from the mold part and leached of UCDs in a time period of 20 minutes or less to 60 minutes.

An ophthalmic device, such as, for example, a contact lens, can be fashioned from different substances. Conventional materials used to fashion contact lenses include hydrogels, such as etafilcon A, which are primarily pHEMA- (poly(2-hydroxyethy methacrylate) based materials. More recently, non-conventional silicone hydrogels, such as galyfilcon A, have been used in the manufacture of ophthalmic devices, including contact lenses. Silicone hydrogels can include both hydrophilic and hydrophobic monomers.

During manufacture of an ophthalmic lens, the lens is typically subjected to a hydration process. Hydration acts to release a cured lens from a mold used to form the lens. Hydration can also be effective in extracting UCDs by leaching the UCDs out of the lens. Effective hydration for lenses fashioned from pHEMA materials hydration can be accomplished with aqueous solutions. However, due to the hydrophobic components in silicone hydrogels, non-aqueous solutions may be necessary to release and leach the silicone lens, in order to make the silicone lens clinically viable.

In response to this need, the present invention provides a hydration process for silicone materials used for lens fabrication that is capable of releasing a lens from a mold part in which the lens was formed, and extricate UCDs from the lens. By way of non-limiting example, in silicone based contact lenses, UCDs may include, for example: unreacted hydrophobic monomer components, monomer diluents from the lens that are not water soluble, and other agents or substances that are impurities in the raw materials.

According to the present invention, a hydration solution that includes deionized water (DI water) and the organic solvent Isopropyl Alcohol (IPA) provides a preferred hydration solution for hydration of silicon based ophthalmic devices. IPA is suitable due to its commercial availability and its Hansen solubility parameters with the silicone monomers and diluents present in the lens. In addition, following a release and leaching process, an IPA solution can be easily removed from the lens by rinsing the lens in DI water. The miscibility of IPA in water provides a fast and efficient means of recovering residual amounts of IPA left in the lens and reduces the number of processing steps subsequent to the IPA leaching process.

The present invention provides specific concentrations of IPA and DI, which are used to release a silicone lens from a mold and leach UCDs from the silicone lens. Contrary to the prior art, the present invention teaches that with the use of various hydration techniques, an IPA concentration in DI that is generally greater than 30% and less than 70% is preferred to effectively cause release of the lens from an associated mold portion and leach UCDs from the lens. The present invention also teaches that a hydration solution maintained at elevated temperatures further facilitates lens 100 release and leaching of UCDs from the lens. An ophthalmic lens can be subjected to an effective solution of IPA and DI water for periods of time that are sufficient to release the lens from an associated mold portion and are conducive to a manufacturing environment; leach UCDs from the lens to a sufficient degree to make the lens clinically viable; and still be compatible with an automated manufacturing line.

By way of non-limiting examples, various implementations can include release and lens extraction that is accomplished by way of a batch process wherein lenses remain submerged in a hydration solution contained in a fixed tank for a specified period of time or in a vertical process where lenses are exposed to a continuous flow of a hydration solution that includes IPA. In some embodiments, the hydration solution can be heated with a heat exchanger or other heating apparatus to further facilitate leaching and release. These and other similar processes can provide an acceptable means of releasing the lens and removing UCDs from the lens prior to packaging.

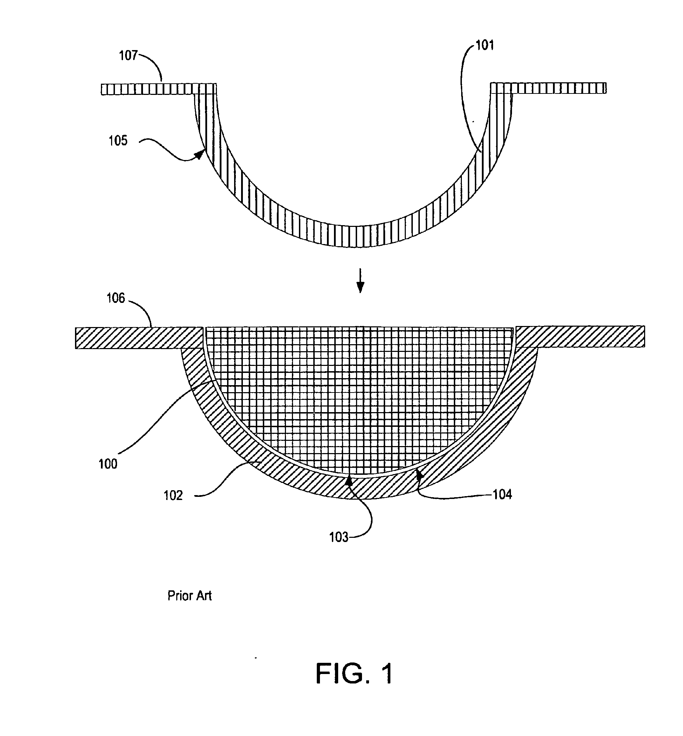

Referring now to Fig. 1, a block diagram is illustrated of an ophthalmic lens 100, such as a contact lens, and mold parts 101-102 used to form the ophthalmic lens 100 (prior art). In some typical embodiments, the mold parts will include a back surface mold part 101 and a front surface mold part 102. As used herein, the term "front surface mold part" refers to the mold part whose concave surface 104 is a lens forming surface used to form the front surface of the ophthalmic lens. Similarly, the term "back surface mold part" refers to the mold part 101 whose convex surface 105 forms a lens forming surface, which will form the back surface of the ophthalmic lens 100. In some embodiments, mold parts 101 and 102 are of a concavo-convex shape, preferably including planar annular flanges 106 and 107, respectively, which surround the circumference of the uppermost edges of the concavo-convex regions of the mold parts 101-102.

Typically, the mold parts 101-102 are arrayed as a "sandwich". The front surface mold part 102 is on the bottom, with the concave surface 104 of the mold part facing upwards. The back surface mold part 101 can be disposed symmetrically on top of the front surface mold part 102, with the convex surface 105 of the back surface mold part 101 projecting partially into the concave region of the front surface mold part 102. Preferably, the back surface mold part 101 is dimensioned such that the convex surface 105 thereof engages the outer edge of the concave surface 104 of the front mold part 102 throughout its circumference, thereby cooperating to form a sealed mold cavity in which the ophthalmic lens 100 is formed.

In some embodiments, the mold parts 101-102 are fashioned of thermoplastic and are transparent to polymerization-initiating actinic radiation, by which is meant that at least some, and preferably all, radiation of an intensity and wavelength effective to initiate polymerization of the lens forming resin or monomer in the mold cavity can pass through the mold parts 101-102. For example, mold parts can include: polystyrene; polyvinylchloride; polyolefin, such as polyethylene and polypropylene; copolymers or mixtures of styrene with acrylonitrile or butadiene, polyacrylonitrile, polyamides, polyesters, and the like.

### Method Steps

Following polymerization of a lens forming mixture to form a lens 100, the lens surface 103 will typically adhere to the mold part surface 104 and the lens 100 will contain UCDs. The steps of the present invention facilitate release of the surface 103 from the mold part surface 104 and leaching of UCDs from the lens.

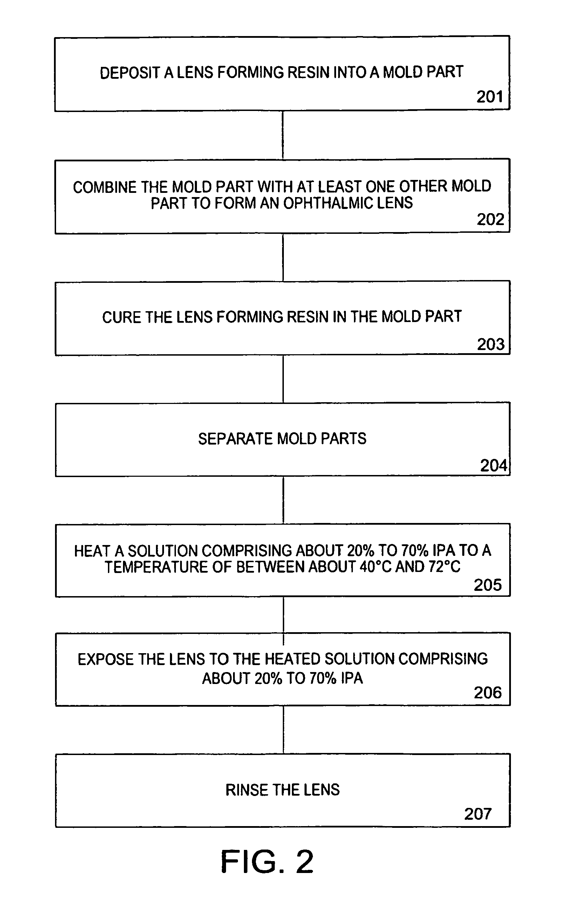

Referring now to Fig. 2, a flow diagram illustrates exemplary steps that may be implemented in some embodiments of the present invention. It is to be understood that some or all of the following steps may be implemented in various embodiments of the present invention. At 201, a lens forming resin, such as, for example, a monomer mixture, is deposited into a first mold part 102, which is utilized to shape the ophthalmic lens 100. Embodiments can include, for example, silicone hydrogel contact lenses 100, which are soft contact lenses having a water content of about 0 to about 90 percent, and preferably a water content of between 35 and 50 percent.

As used in the present invention, a silicone hydrogel includes a crosslinked polymeric system that can absorb and retain water in an equilibrium state. In addition, any silicone hydrogel formulations may be processed according to the process of the present invention. A silicone-containing component is one that contains at least one [-Si-O-Si] group, in a monomer, macromer or prepolymer. Preferably, the Si and attached O are present in the silicone-containing component in an amount greater than 20 weight percent, and more preferably greater than 30 weight percent of the total molecular weight of the silicone-containing component and comprise polymerizable functional groups such as acrylate, methacrylate, acrylamide, methacrylamide, N-vinyl lactam, N-vinylamide, and styryl functional groups. Examples of silicone components which may be included in the silicone hydrogel formulations include, but are not limited to, silicone macromers, prepolymers and monomers. Examples of silicone macromers include, without limitation, polydimethylsiloxane methacrylated with pendant hydrophilic groups; polydimethylsiloxane macromers with polymerizable functional group(s); polysiloxane macromers incorporating hydrophilic monomers; macromers comprising polydimethylsiloxane blocks and polyether blocks; combinations thereof and the like.

The silicone containing macromers may also be used as monomer. Suitable silicone monomers include tris(trimethylsiloxy)silylpropyl methacrylate, hydroxyl functional silicone containing monomers, such as 3-methacryloxy-2-hydroxypropyloxy)propylbis(trimethylsiloxy)methylsilane; mPDMS containing monomers or siloxane monomers, including. but not limited to, amide analogs of TRIS, vinylcarbamate or carbonate analogs, monomethacryloxypropyl terminated polydimethylsiloxanes, polydimethylsiloxanes, 3-methacryloxypropylbis(trimethylsiloxy)methylsilane, methacryloxypropylpentamethyl disiloxane and combinations thereof.

Hydrophilic components include those which are capable of providing at least about 20% and preferably at least about 25% water content to the resulting lens when combined with the remaining reactive components. The hydrophilic monomers that may be used to make the polymers of this invention have at least one polymerizable double bond and at least one hydrophilic functional group and are well known in the art. Non-limiting examples include N,N-dimethylacrylamide, 2-hydroxyethyl methacrylate, glycerol methacrylate, 2-hydroxyethyl methacrylamide, NVP, N-vinyl-N-methyl acrylamide, polyethyleneglycol monomethacrylate, methacrylic acid, acrylic acid, combinations thereof and the like.

At 202, the first mold part 102 can be combined with at least one other mold part 101 to shape the deposited silicone monomer or other lens forming resin.

At 203, the silicone monomer, or other lens forming resin, is cured and formed into a lens 100. Curing can be effected, for example, by various means known in the art, such as, exposure of the monomer to actinic radiation, exposure of the monomer to elevated heat (i.e. 40°C to 75°C), or exposure to both actinic radiation and elevated heat.

At 204, the first mold part 101 can be separated from the second mold part 102 in a demolding process. In some embodiments, the lens 100 will have adhered to the second mold part 102 (front curve mold part) during the cure process and remain with the second mold part 102 after separation until the lens 100 has been released from the front curve mold part 102 via release. In other embodiments, the lens 100 can adhere to the first mold part 101.

At 205, in some embodiments, the hydration solution can be heated to a temperature of between about 40°C to about 72°C. Heating can be accomplished, for example, with a heat exchange unit to minimize the possibility of explosion, or by any other feasibly apparatus for heating a liquid.

At 206, the lens is hydrated by exposing the lens to a hydration solution of isopropyl alcohol (IPA) and DI water. The hydration solution will include about 30% to 70% IPA and may include other additives, such as surfactants (e.g., Tween 80, which is polyoxyethylene sorbitan monooleate, Tyloxapol, octylphenoxy (oxyethylene) ethanol, amphoteric 10), preservatives (e.g. EDTA, sorbic acid, DYMED, chlorhexadine gluconate, hydrogen peroxide, thimerosal, polyquad, polyhexamethylene biguanide), antibacterial agents, lubricants, salts, buffers or other additives that may provide an added benefit. In some embodiments, additives can be added to the hydration solution in amounts varying between 0.01 % and 10% by weight, but cumulatively less than about 10% by weight.

The temperatures of the hydration solution can be anywhere from near freezing to near boiling; however, it is preferred that the temperatures between 30° C and 72° C, and even more preferably between 45° C and 65° C.

Exposure of the ophthalmic lens 100 to the hydration solution of IPA and DI water can be effected by washing, spraying, soaking, submerging, or any combination of those options. For example, in some embodiments, the lens 100 can be washed with a hydration solution of IPA and DI water in a hydration tower.

To hydrate the lenses by washing in a hydration tower, front curve mold parts 102 containing lenses 100 can be placed in pallets or trays and stacked vertically. The solution can be introduced at the top of the stack of lenses 100 so that the solution will flow downwardly over the lenses 100. The solution can also be introduced at various positions along the tower. In some embodiments, the trays can be moved upwardly allowing the lenses 100 to be exposed to increasingly fresher solution.

In other embodiments, the ophthalmic lenses 100 are soaked or submerged in hydration solution during the hydration step 206.

The hydration step can last from between 2 minutes to 400 minutes, preferably between from 10 minutes and 180 minutes, more preferably from 15 to 30 minutes; however, the length of the hydration step depends upon the lens materials, including colorant materials if any, the materials that are used for the solutions or solvents, and the temperatures of the solutions. Hydration treatment time can be different from the time required for the lens and the solution to reach equilibrium. Sufficient treatment times typically swell the contact lens, release the excess material from the lens, and bring the lens to a functional size.

In another aspect of the present invention, a suitable hydration treatment is based upon an amount of UCDs present in an ophthalmic lens. Lenses are subjected to a specified hydration treatment and tested for UCDs at incremental time periods. A minimum time period suitable for effective hydration is ascertained by determining when UCDs are reduced to an acceptable level.

For example, in some embodiments, ophthalmic lenses can be subjected to hydration treatment and a GC Mass Spectrometer can be used to measure the level of one or more UCDs in the ophthalmic lenses, at various time intervals, in order to determine a minimum time interval the lenses need to be subjected to a particular hydration treatment before an amount of particular UCDs present in specific lenses is reduced to a maximum threshold amount.

Accordingly, in some embodiments, a GC Mass Spectrometer can be used to check for a maximum threshold of UCDs, such as SiMMA, mPDMS, SiMMA glycol, and epoxide, of approximately 300 ppm. A minimum hydration treatment time period necessary to reduce the presence of such UCDs to 300 ppm or less in specific lenses can be determined by the periodic measurements. In additional embodiments, other UCDs, such as, for example, D3O or other diluents, can be measured to detect the presence of a maximum amount of approximately 60 ppm. Embodiments can also include setting a threshold amount of a particular UCD at the minimum detection level ascertainable by the testing equipment.

In some preferred methods, after separation or demolding, the lenses on the front curves, which may be part of a frame, are mated with individual concave slotted cups to receive the contact lenses when they release from the front curves. The cups can be part of a tray. Examples can include each tray with 32 lenses, and 20 trays that can be accumulated into a magazine. According to the present invention, magazines can be accumulated and then lowered into tanks containing, for example, between 20 and 100 liters of hydration solution including DI and about 30% to 70% IPA. The solution may also include other additives, such as surfactants (as descried above). In addition, in some embodiments, the hydration solution can be heated to a temperature of between about 30°C and 72°C.

At 207, the ophthalmic lenses are rinsed to remove IPA from the lenses. Rinsing can be accomplished, for example, by any method that exposes the lens to a rinsing solution, such as, for example, DI water. Accordingly, in various embodiments rinsing can include one or more of: subjecting the lens to a flow of rinsing solution, and submersion of the lens in a rinsing solution.

### Apparatus

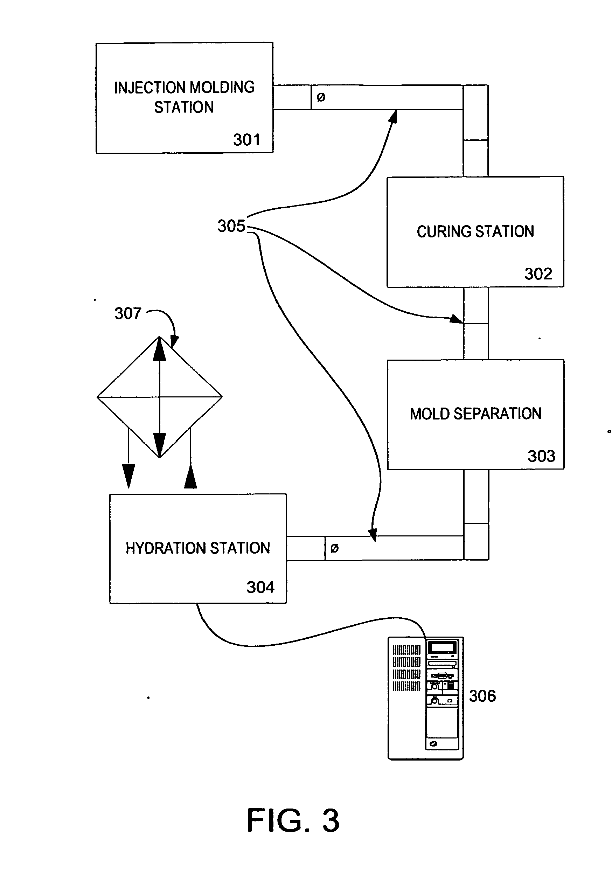

Referring now to Fig. 3, a block diagram is illustrated of apparatus contained in processing stations 301-304 that can be utilized in implementations of the present invention. In some preferred embodiments, processing stations 301-304 can be accessible to ophthalmic lenses 100 via a transport mechanism 305. The transport mechanism 305 can include for example one or more of: a robot, a conveyor and a rail system in conjunction with a locomotion means that may include, a conveyor belt, chain, cable or hydraulic mechanism powered by a variable speed motor or other known drive mechanism (not shown).

Some embodiments can include back surface mold parts 101 placed in pallets (not shown). The pallets can be moved by the transport mechanism 305 between two or more processing stations 301-304. A computer or other controller 306 can be operatively connected to the processing stations 301-304 to monitor and control processes at each station 301-304 and also monitor and control the transport mechanism 305 to coordinate the movement of lenses between the process stations 301-304.

Processing stations 301-304 can include, for example, an injection molding station 301. At the injection molding station 301, injection molding apparatus deposits a quantity of a lens forming resin, such as, for example, a silicone hydrogel as described above, into the front curve mold portion 102 and preferably completely covers the mold surface 104 with the lens forming resin. The lens forming resin should comprise any material or mixture of materials, which upon polymerization yields an optically clear, integral shape-sustaining contact lens or contact lens precursor.

As utilized in this application, a "precursor" means an object which has the desired relative dimensions and which upon subsequent hydration in water or buffered isotonic saline aqueous solution can be worn as a contact lens. Examples of such compositions abound in this field and are readily ascertainable by reference to standard literature sources.

In some embodiments, polymerization of lens forming resin can be carried out in an atmosphere with controlled exposure to oxygen, including, in some embodiments, an oxygen-free environment, because oxygen can enter into side reactions, which interfere with the desired optical quality and clarity of the polymerized lens. Oxygen may disturb the reproducibility of the desired parameters of the lens. In some embodiments, the lens mold halves are also prepared in an atmosphere that has limited oxygen or is oxygen-free; to avoid the risk that oxygen absorbed in or on the mold half would react with the lens forming resin. Methods and apparatus for controlling exposure to oxygen are well known in the art.

A curing station 302 can include apparatus for polymerizing the lens forming resin. Polymerization is preferably carried out by exposing the composition to polymerization initiating conditions. Curing station 302 therefore includes apparatus that provide a source of initiation of the lens forming resin deposited into the front curve mold 102. The source of initiation can include for example, one or more of: actinic radiation and heat. In some embodiments, actinic radiation can be sourced from bulbs under which the mold assemblies travel. The bulbs can provide an intensity of actinic radiation in a given plane parallel to the axis of the bulb that is sufficient to initiate polymerization.

A curing station 302 heat source should be effective to raise the temperature of the lens forming resin to a temperature sufficient to assist the propagation of the polymerization and to counteract the tendency of the lens forming resin to shrink during the period that it is exposed to the actinic radiation and thereby promote improved polymerization. In some embodiments, the heat source can maintain the temperature of the lens forming resin (by which is meant that resin before it begins to polymerize, and as it is polymerizing) above the glass transition temperature of the polymerized product or above its softening temperature as it is polymerizing. Such temperature can vary with the identity and amount of the components in the lens forming resin. In general, the system should be capable of establishing and maintaining temperatures on the order of 40° C degree to 75° C.

In some embodiments, a source of heat can include a duct, which blows warm gas, such as, for example, N₂ or air, across and around the mold assembly as it passes under the actinic radiation bulbs. The end of the duct can be fitted with a plurality of holes through which warm gas passes. Distributing the gas in this way helps achieve uniformity of temperature throughout the area under the housing. Uniform temperatures throughout the regions around the mold assemblies permit more uniform polymerization.

A mold separation station 303 can include apparatus to separate the back curve mold part 101 from the front curve mold part 102. Separation can be accomplished for example with mechanical fingers and high speed robotic movement that pry the mold parts apart.

Embodiments of the present invention can also include a hydration station 304 that includes, for example, at least one of a hydration tower or a submersion vehicle capable of exposing the ophthalmic lenses 100 to a hydration process in accordance with the present invention. For example, hydration station 304 can include an apparatus in which the lenses are stacked vertically in trays, which are moved upwardly, and a flow of the hydration solution flows downwardly in the tray stack to successively wash the lenses in the lower trays of the stack. The solution may be introduced at the top of the stack or fresh solution may be introduced at various points in the stack. In some embodiments, a flow of hydration solution with different concentrations of IPA may be introduced at various points in the stack. Generally, a cascade of solution flows downwardly over each ophthalmic lens. Detailed descriptions of various embodiments of hydration apparatus utilizing a downward flow are disclosed in U.S. Patent 6,207,086, which is incorporated by reference into this application.

Some embodiments can also include submersion of the ophthalmic lenses into a hydration tank. For example, front curve mold parts 102 containing lenses 100 can be sandwiched between a mold carrier and a plate to form a hydration carrier (not shown). Robotic assemblies can immerse each hydration carrier in a hydration solution comprising DI with an IPA concentration of about 35% to 75%. Detailed descriptions and examples of various embodiments of hydration apparatus utilizing a downward flow are disclosed in U.S. Patent 6,207,086.

Various embodiments can include a series of multiple solution baths into which the lenses are placed or various flows of hydration solution to which the lenses are exposed. Each bath or flow may have the same or a different concentration of IPA in DI.

For example, some embodiments may include lenses that are exposed (i.e. through submersion or solution flow) to a first hydration solution with the primary purpose of releasing each lens 100 from its respective mold part 102. A second hydration solution exposure can leach UCDs from the lens and a third exposure can rinse the lens.

In some embodiments, a heat exchanger 307 is used to maintain the temperature of the hydration solution at a temperature greater than typical ambient room temperature. For example, and without limitation, a heat exchanger can be used to raise the temperature of the hydration solution to about 30° C to about 72° C.

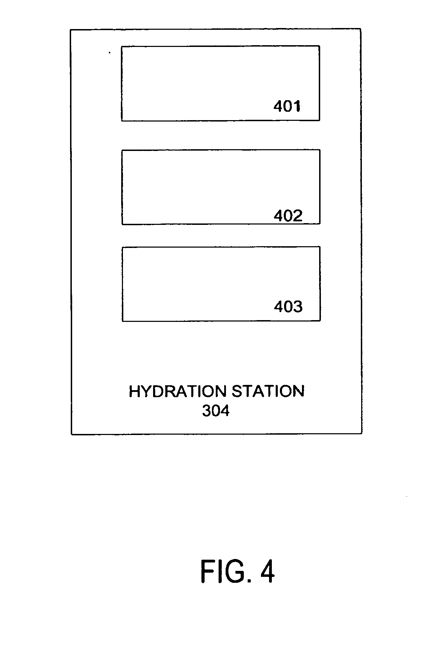

Referring now to Fig. 4, some exemplary embodiments can therefore include a first exposure or submersion of a lens in a first hydration solution that includes DI with about 60% IPA to 75% IPA and preferably 70% IPA. Exposure times can be adjusted according to other variables, such as the lens 100 materials and the mold part 102 materials. Generally, an exposure time of about 10 to 30 minutes is sufficient for release purposes in the first hydration solution. The lens 100 can then be exposed to a second exposure or submersion in a second hydration solution directed towards leaching UCDs from the lens 100. The second hydration solution can preferably also include between about 60% and 75% IPA and between about 20% to 40% DI, respectively, with some preferred embodiments containing about 70% IPA and 30% DI. The second exposure can be for a period of between about 10 minutes and 60 minutes and preferably about 15 minutes.

In some embodiments, a first submersion can take place in a first hydration tank 401 included in the hydration station 304 and the second submersion can take place in a second submersion tank included in the hydration station 304. Each of the first hydration tank and the second hydration tank will contain a suitable hydration solution including IPA and DI water. Similarly, other submersions can take place in separate hydration tanks. For example, a third submersion or exposure directed towards rinsing the lens 100 can take place in a third hydration tank 403 and include 100% DI. Embodiments can include a submersion of the lens 100, which is directed towards rinsing for a period of 30 minutes to 180 minutes, and preferably about 60 minutes.

As discussed above, in some embodiments, one or both of the first hydration solution and the second hydration solution can be heated to further facilitate release and leaching effects.

In other embodiments, the third exposure directed to rinsing of the lens of the IPA solution can be accomplished by exposing the lens to a flow of DI water. Preferably, a flow of DI water directed towards rinsing the lens will flow at a rate of 32 ml's per lens per 6 seconds or approximately 5 to 6 ml's per lens per second and last for a period of time of about 5-30 minutes and most preferably about 15 minutes.

### Examples:

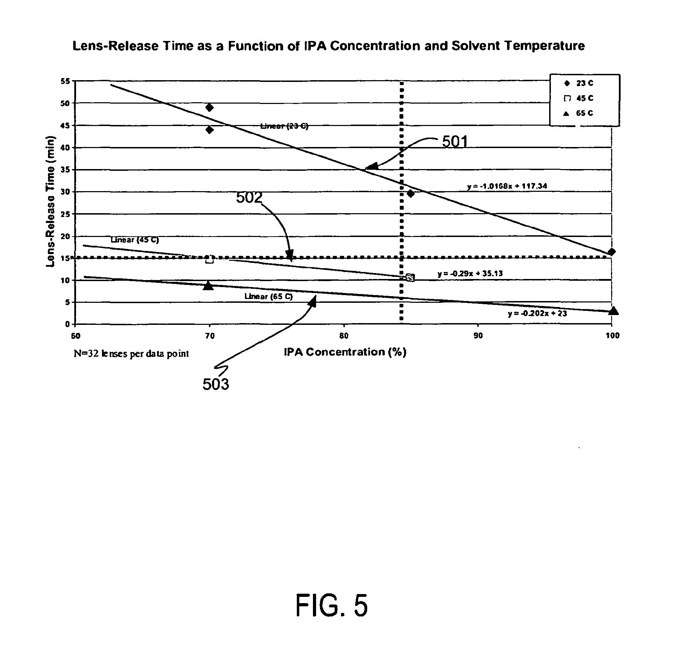

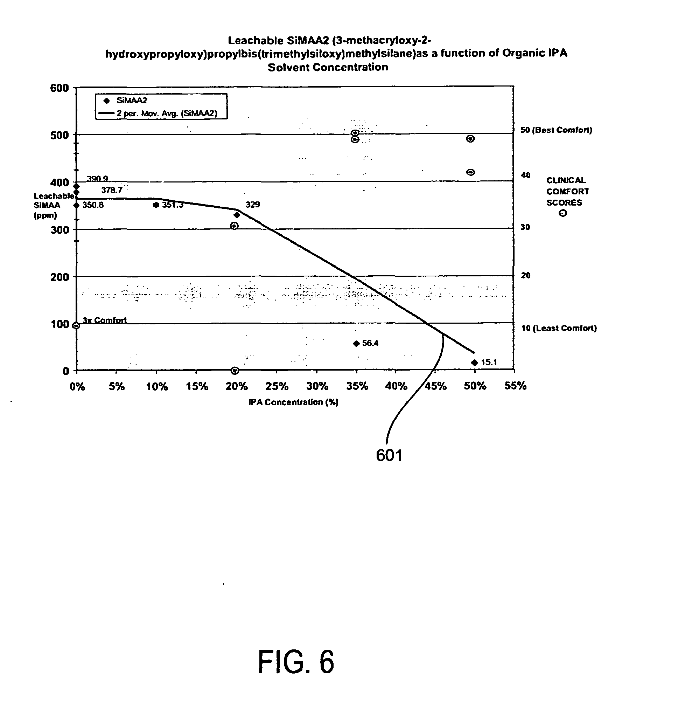

Referring now to Figs. 5 and 6, clinical protocols were conducted to determine that contrary to prior art findings, IPA can be made suitable for use in the release and leach steps of an automated manufacturing environment that forms silicone hydrogel ophthalmic lenses. Specifically it was discovered that, contrary to prior art indications, lower concentration solutions of IPA could effectively be used to remove UCDs in a timeframe that is suitable to a manufacturing environment when the temperature of the IPA solution is sufficiently elevated.

Referring now to Fig. 5, a chart is shown illustrating the results of a first clinical protocol tracking the relationship between IPA solvent temperature and IPA solvent concentration and time required to release a lens from an associated mold part. As indicated by the chart, contrary to the prior art, the present invention teaches that a silicone based ophthalmic lens can be released from an associated mold part in 20 minutes or less, if the lens is exposed to an IPA solvent that has been elevated to within a specific temperature range and the IPA solvent includes a specific concentration range of IPA.

In the protocol illustrated in Fig. 5, data was collected for various sets of lenses 100, each lens 100 manufactured in a mold 101-102. Each lens 100 began the protocol attached to a mold half that was used to manufacture the lens 100. The lens 100 was exposed to a specific IPA solution and tracked to determined when release of the lens 100 from the mold half was accomplished as a result of the exposure to the specific IPA solution. IPA solutions to which the lenses were exposed varied in IPA concentration from about 70% to 100%, and in temperature from about 23°C (approximately room temperature) to about 65°C (approximately 20% cooler than the boiling point of IPA).

According to the present invention, a combination of an IPA solution with an elevated temperature of 40°C or more, and a concentration of 30% to 70% IPA, can be used to effectively release the lens 100 from an associated mold part 102 and leach UCDs from the lens 100. IPA concentrations greater than about 70% IPA were considered unsuitable since the greater than 70% concentrations caused many lenses to swell more than 35% which in turn created yield problems.

Fig. 5 include extrapolations 501-503 of data points indicating an amount of time necessary to release a lenses in each lens set. A first extrapolation 501 illustrates the time required for release of a lens 100 from a mold part 102, after exposing the lens 100 to various IPA solutions maintained at 23°C. The 23°C IPA solutions varied in concentration from about 70% IPA to 100% IPA. Generally, the IPA solution with a temperature of 23°C and an IPA concentration of 70% or less required more than about 45 minutes to release the lens 100 from the mold part 102. In addition, the slope of the 23°C extrapolation 501 is approximately y=-1.0168x+117.34, indicating a relatively high reliance on the IPA concentration to cause release.

A second extrapolation 502 illustrates the time required for release of a lens 100 from a mold part 102, after exposing the lens 100 to various IPA solutions maintained at 45°C. As indicated by the chart, release from the mold part 102 is achieved in about 15 minutes by using a solution with an IPA concentration of 70% that has been heated to 45°C. The slope of the 45°C extrapolation is approximately y=-0.29x+35.13, indicating a lower dependence on the concentration of IPA to cause release than the IPA solutions at 23°C.

A third extrapolation 503 illustrates the time required for release of a lens 100 from a mold part 102, after exposing the lens 100 to various IPA solutions maintained at 65°C. As indicated by the chart, release from the mold part 102 is achieved in about 9 minutes by using a solution with an IPA concentration of 70% that has been heated to 65°C. In addition, the slope of the 65°C extrapolation is approximately y=-0.202x+23, indicating a still lower dependence on the concentration of IPA to cause release than the IPA solutions at 45°C

In the protocols, an upper temperature limit for the IPA solution of 65°C was chosen based upon the physical considerations of IPA. The boiling point for IPA is about 81 °C. Since the protocols were directed to use of IPA in a manufacturing environment, and the possibility that IPA heated to a temperature close to 81°C may inadvertently boil and consequently expand inside of the manufacturing equipment causing explosion, it was decided to limit the protocol to IPA heated to 20% less than 81°C, or approximately 65°C. However, the protocol data, represented by the extrapolations 501-503 indicate that temperatures greater than 65°C, such as, for example 72°C (10% less than boiling) would also be effective in conducting the release step. Therefore it can be concluded that machinery designed to contain a condition of boiling IPA would be suitable for releasing a lens 100 from a mold part using an IPA solution heated to a temperature approaching 81°C.

Referring now to Fig. 6, a second clinical protocol was designed to further investigate the effects of IPA concentrations on lens comfort and establish a minimum concentration of IPA necessary to effectively remove leachable UCDs that may affect lens comfort. In order to determine the extraction efficiency of leachable UCDs, SiMAA2 (3-mthacryloxy-2-hydroxypropyloxy) propylbis (trimethysiloxy) methylsilane) levels were measured in the finished lenses and were used as an indicator of UCDs remaining in the lens. Accordingly, higher levels of SiMAA2 indicate lower extraction efficiency of UCDs.

Fig. 6 shows an extrapolation of data from the second clinical protocol. The amount of leachable SiMAA2 (ppm) 601 can be seen to fall off sharply at a concentration of about 20% IPA, with an acceptably low level of SiMAA2 being reached with the use of a solution of about 30% IPA. In addition, clinical comfort scores 602 can be seen to rise significantly at a concentration of about 30% IPA or more. As the concentration of IPA is further increased, the level of leachable SiMAA2 continues to decline and the clinical comfort scores remain high. Accordingly, the second protocol indicates that effective leaching of UCDs from the lens 100 can be accomplished with the use of an IPA solution of approximately 30% or more.

Although not indicated in the data charts of Figs. 5 and 6, it was also determined that use of too high of a concentration of IPA can be associated with too much swelling of the lens 100 and damage to the lens 100 during automated manufacturing process. Therefore, an upper limit in the concentration of IPA in the solution should be about 70% IPA to 30% DI.

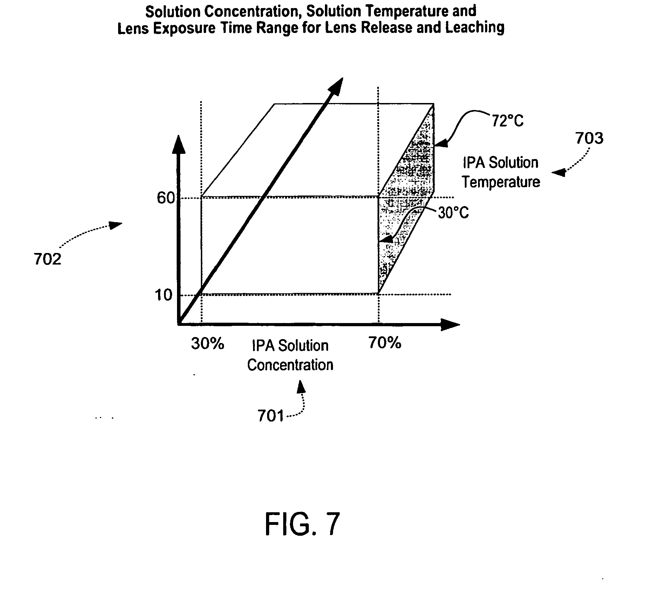

Fig. 7 provides a three dimensional graph illustrating IPA solution concentration, IPA solution temperature and lens 100 exposure time ranges for leach and release of a silicone ophthalmic lens 100, according to the present invention.

As illustrated in the chart, according to the present invention, about 10 minutes is the lower limit of time acceptable to effectively release and leach the lens 100 in an IPA solution of appropriate concentration and temperature. An upper limit of about 60 minutes approximates a time period for leaching that is acceptable while efficiently running an automated manufacturing process.

Fig. 7 also illustrates that an IPA solution with a concentration of about 30% IPA in DI is a lower limit which will provide adequate leaching of the ophthalmic lens 100, and 70% IPA concentration is an upper limit in consideration of the swelling of the lens and damage that may result from handling a lens exposed to higher concentrations.

In addition, Fig. 7 illustrates that, according to the present invention, the IPA solution used for release and leaching should be maintained at about 30°C to 72°C to provide further efficiency in the release and leaching process.

The invention has been described herein with reference to some embodiments, which are preferred; however, variations within the scope of the claims below will be known to a person of ordinary skill in the art, and are therefore included herein.

## Claims

1. A method of processing an ophthalmic lens comprising silicone hydrogel, the method comprising:
depositing (201) a lens forming resin in a mold part;
curing (203) the lens forming resin to form a first ophthalmic lens and cause the first ophthalmic lens to adhere to the mold part;
heating (205) a first hydration solution of 30% to 70% IPA to a temperature of between 30°C and 72°C;
exposing (206) the first ophthalmic lens to the heated first hydration solution of 30% to 70% isopropyl alcohol for a first time period of between 10 and 60 minutes causing the first ophthalmic lens to release from the mold part;
heating a second hydration solution of 30% to 70% IPA to a temperature of between 30°C and 72°C;
exposing the first ophthalmic lens to the heated second hydration solution of 30% to 72% IPA for a second period of 10 minutes to 60 minutes leaching unreacted components and diluents from the first ophthalmic lens; and
exposing (207) the first lens to a third hydration solution comprising 100% deionized water for a third time period of 10 minutes to 180 minutes rinsing the second hydration solution from the first lens; and further comprising the steps of:
directing the first hydration solution firstly to the first lens having a first concentration of unreacted components and diluents; and
then directing the first hydration solution to a second lens having a second concentration of unreacted components and diluents that is higher than said first concentration of unreacted components and diluents.

2. The method of claim 1 wherein the first hydration solution and the second hydration solution are heated to a temperature of between 30°C and 40°C.

3. The method of claim 1 wherein the first hydration solution and the second hydration solution are heated to a temperature of between 41°C and 50°C.

4. The method of claim 1 wherein the first hydration solution and the second hydration solution are heated to a temperature of between 51°C and 62°C.

5. The method of claim 1 wherein the first hydration solution and the second hydration solution comprise an aqueous solution of between 20% and 30% isopropyl alcohol.

6. The method of claim 1 wherein the first hydration solution and the second hydration solution comprise an aqueous solution of between 31 % and 40% isopropyl alcohol.

7. The method of claim 1 wherein the first hydration solution and the second hydration solution comprise an aqueous solution of between 41% and 50% isopropyl alcohol.

8. The method of claim 1 wherein the first hydration solution and the second hydration solution comprise an aqueous solution of between 51% and 60% isopropyl alcohol.

9. The method of claim 1 wherein the first time period and the second time period comprise a period of between 10 minutes to 20 minutes each.

10. The method of claim 1 wherein the first time period and the second time period comprise a period of between 21 minutes to 30 minutes each.

11. The method of claim 1 wherein the first time period and the second time period comprise a period of between 31 minutes to 40 minutes each.

12. The method of claim 1 wherein the first time period and the second time period comprise a period of between 41 minutes to 50 minutes each.

13. The method of claim 1 wherein the first time period and the second time period comprise a period of between 51 minutes to 60 minutes each.

14. The method of claim 1 wherein the third period comprises a period of between 10 minutes to 30 minutes.

15. A method of processing a first ophthalmic lens comprising silicone hydrogel, the method comprising:
depositing (201) a lens forming resin on a lens forming surface of a first mold part;
bringing the lens forming mixture into contact with a second lens forming surface of a second mold part, wherein the first mold part and the second mold part are configured to receive each other such that a cavity is formed between the first lens forming surface and the second lens forming surface and wherein the cavity defines the shape of the first ophthalmic lens;
exposing (203) the lens forming resin to polymerization initiating conditions to form a first lens from the lens forming resin;
exposing (206) the first lens and the mold part to a first hydration solution comprising 30% to 70% isopropyl alcohol for a period of 10 minutes to 60 minutes until the first lens comprises less than a predetermined threshold of 300 parts per million ofunreacted components and diluents; and
exposing (207) the first lens and the mold part to a second hydration solution comprising deionized water to rinse the first hydration solution from the first lens; and further comprising the steps of:
directing the first hydration solution to the first lens having a first concentration of unreacted components and diluents; and
then directing the first hydration solution to a second lens having a second concentration of unreacted components and diluents that is higher than said first concentration of unreacted components and diluents.

16. The method of claim 15 wherein the polymerization initiating conditions comprises actinic radiation.

17. The method of claim 15 wherein the polymerization initiating conditions comprises actinic radiation and heat.

18. The method of claim 15 wherein the first hydration solution and the second hydration solution comprise an aqueous solution of between 61% and 70% isopropyl alcohol.

19. The method of processing an ophthalmic lens comprising silicone hydrogel of claim 15, wherein the first mold part comprises a front curve and the second mold part comprises a back curve, and the method further comprises the steps of:
subsequent to forming the lens, separating the front curve from the back curve where the cured lens removably adheres to the front curve; and
subjecting the front curve of the mold and the lens to an equilibration solution comprising deionized water.

20. The method of claim 15 wherein exposing the lens and the mold part to a first hydration solution comprises immersing the lens and mold in the first hydration solution.

21. The method of claim 15 wherein exposing the lens and the mold part to a second hydration solution comprises immersing the lens and mold in the second hydration solution.

22. The method of claim 15 additionally comprising the step of positioning the mold so that gravity acts to facilitate the separation of the lens from the mold surface while the lens is subjected to the aqueous solution.

23. The method of claim 15, wherein while the lens is exposed to the hydration solution, the hydration solution is maintained at a temperature of between 45°C to 80°C.

24. The method of claim 15, wherein while the lens is exposed to the hydration solution, the hydration solution is maintained at a temperature of between 70°C to 80°C.

25. The method of claim 15 wherein the second hydration solution additionally comprises one or more of: polyoxyethylene sorbitan monooleate, Tyloxapol, octylphenoxy (oxyethylene) ethanol, amphoteric 10, sorbic acid, DYMED, chlorbexadine gluconate, hydrogen peroxide, thimerosal, polyquad, and polyhexamethylene biguanide.

26. An automated apparatus for hydrating and leaching an ophthalmic device comprising:
a) a pallet for transporting one or more lens mold parts, each mold part comprising a lens forming surface and adapted to receive a lens forming mixture for forming an ophthalmic lens;
b) a deposition mechanism (301) for depositing a lens forming mixture into the lens forming surface;
c) a curing station (302) functional to expose the lens forming mixture to polymerization initiating conditions to cure the lens forming mixture and form a first ophthalmic lens causing the first lens to adhere to the mold part;
d) a hydration station (304) functional to:
expose the mold and first ophthalmic lens having a first concentration of unreacted components and diluents to a first hydration solution comprising 30% to 70% isopropyl alcohol for a period of 10 minutes to 60 minutes until the lens comprises less than 300 parts per million of unreacted components and diluents and the lens is released from the mold part;
expose a second ophthalmic lens having a second concentration of unreacted components and diluents that is higher than said first concentration of unreacted components and diluents to the first hydration solution; and
expose the lens and the mold part to a second hydration solution comprising deionized water; and
e) a robotic transfer device (305) for transferring one or more pallets and lens mold parts from the curing station to the hydration station.

27. The automated apparatus of claim 26 additionally comprising apparatus (307) for heating the first hydration solution to a temperature of between 30°C and 72°C.

28. The automated apparatus of claim 27 wherein the apparatus (307) for heating the first hydration solution to a temperature of between 30°C and 72°C comprises a heat exchange unit.

## Patentansprüche

1. Verfahren zur Verarbeitung einer Augenlinse, die ein Silikon-Hydrogel umfasst, wobei das Verfahren umfasst:
Abscheiden (201) eines linsenbildenden Harzes in einem Formteil;
Aushärten (203) des linsenbildenden Harzes, um eine erste Augenlinse zu bilden und zu bewirken, dass die erste Augenlinse an dem Formteil anhaftet;
Erwärmen (205) einer ersten Hydratisierungslösung mit 30% bis 70% IPA auf eine Temperatur von zwischen 30°C und 72°C;
Aussetzen (206) der ersten Augenlinse gegenüber der erwärmten ersten Hydratisierungslösung mit etwa 30% bis 70% Isopropylalkohol für einen ersten Zeitraum von zwischen 10 und 60 Minuten, wodurch bewirkt wird, dass die erste Augenlinse sich vom Formteil löst;
Erwärmen einer zweiten Hydratisierungslösung mit 30% bis 70% IPA auf eine Temperatur von zwischen 30°C und 72°C;
Aussetzen der ersten Augenlinse gegenüber der erwärmten zweiten Hydratisierungslösung mit 30% bis 72% IPA für einen zweiten Zeitraum von 10 Minuten bis 60 Minuten, wodurch nicht-umgesetzte Komponenten und Verdünnungsmittel aus der ersten Augenlinse ausgelaugt werden; und
Aussetzen (207) der ersten Linse gegenüber einer dritten Hydratisierungslösung, die 100% entionisiertes Wasser umfasst, für einen dritten Zeitraum von 10 Minuten bis 180 Minuten, wodurch die zweite Hydratisierungslösung von der ersten Linse abgespült wird; und das weiter die Schritte umfasst:
Leiten der ersten Hydratisierungslösung zunächst zur ersten Linse mit einer ersten Konzentration von nicht-umgesetzten Komponenten und Verdünnungsmitteln, und
anschließend Leiten der ersten Hydratisierungslösung zu einer zweiten Linse mit einer zweiten Konzentration von nicht-umgesetzten Komponenten und Verdünnungsmitteln, die höher ist als die erste Konzentration von nicht-umgesetzten Komponenten und Verdünnungsmitteln.

2. Verfahren nach Anspruch 1, wobei die erste Hydratisierungslösung und die zweite Hydratisierungslösung auf eine Temperatur von zwischen 30°C und 40°C erwärmt werden.

3. Verfahren nach Anspruch 1, wobei die erste Hydratisierungslösung und die zweite Hydratisierungslösung auf eine Temperatur zwischen 41°C und 50°C erwärmt werden.

4. Verfahren nach Anspruch 1, wobei die erste Hydratisierungslösung und die zweite Hydratisierungslösung auf eine Temperatur von zwischen 51°C und 62°C erwärmt werden.

5. Verfahren nach Anspruch 1, wobei die erste Hydratisierungslösung und die zweite Hydratisierungslösung eine wässrige Lösung mit zwischen 20% und 30% Isopropylalkohol umfassen.

6. Verfahren nach Anspruch 1, wobei die erste Hydratisierungslösung und die zweite Hydratisierungslösung eine wässrige Lösung mit zwischen 31% und 40% Isopropylalkohol umfassen.

7. Verfahren nach Anspruch 1, wobei die erste Hydratisierungslösung und die zweite Hydratisierungslösung eine wässrige Lösung mit zwischen 41% und 50% Isopropylalkohol umfassen.

8. Verfahren nach Anspruch 1, wobei die erste Hydratisierungslösung und die zweite Hydratisierungslösung eine wässrige Lösung mit zwischen 51% und 60% Isopropylakohol umfassen.

9. Verfahren nach Anspruch 1, wobei der erste Zeitraum und der zweite Zeitraum einen Zeitraum von jeweils zwischen 10 Minuten bis 20 Minuten umfassen.

10. Verfahren nach Anspruch 1, wobei der erste Zeitraum und der zweite Zeitraum einen Zeitraum von jeweils zwischen 21 Minuten bis 30 Minuten umfassen.

11. Verfahren nach Anspruch 1, wobei der erste Zeitraum und der zweite Zeitraum einen Zeitraum von jeweils zwischen 31 Minuten bis 40 Minuten umfassen.

12. Verfahren nach Anspruch 1, wobei der erste Zeitraum und der zweite Zeitraum einen Zeitraum von jeweils zwischen 41 Minuten bis 50 Minuten umfassen.

13. Verfahren nach Anspruch 1, wobei der erste Zeitraum und der zweite Zeitraum einen Zeitraum von jeweils zwischen 51 Minuten bis 60 Minuten umfassen.

14. Verfahren nach Anspruch 1, wobei der dritte Zeitraum einen Zeitraum von zwischen 10 Minuten bis 30 Minuten umfasst.

15. Verfahren zur Verarbeitung einer ersten Augenlinse, die Silikon-Hydrogel umfasst, wobei das Verfahren umfasst:
Abscheiden (201) eines lnsenbildenden Harzes auf einer linsenbildenden Oberfläche eines ersten Formteils;
Inkontaktbringen der linsenbildenden Mischung mit einer zweiten linsenbildenden Oberfläche eines zweiten Formteils, wobei das erste Formteil und das zweite Formteil so konfiguriert sind, dass sie einander aufnehmen, so dass ein Hohlraum zwischen der ersten linsenbildenden Oberfläche und der zweiten linsenbildenden Oberfläche gebildet wird, und wobei der Hohlraum die Form der ersten Augenlinse definiert;
Aussetzen (203) des linsenbildenden Harzes gegenüber polymerisationsinitiierenden Bedingungen, um eine erste Linse aus dem linsenbildenden Harz zu bilden;
Aussetzen (206) der ersten Linse und des Formteils gegenüber einer ersten Hydratisierungslösung, die 30% bis 70% Isopropylalkohol umfasst, für einen Zeitraum von 10 bis 60 Minuten, bis die erste Linse weniger als einen vorbestimmten Schwellenwert von 300 Teilen pro Million nicht-umgesetzte Komponenten und Verdünnungsmittel umfasst; und
Aussetzen (207) der ersten Linse und des Formteils gegenüber einer zweiten Hydratisierungslösung, die entionisiertes Wasser umfasst, um die erste Hydratisierungslösung von der ersten Linse abzuspülen; und das weiter die Schritte umfasst:
Leiten der ersten Hydratisierungslösung zur ersten Linse mit einer ersten Konzentration von nicht-umgesetzten Komponenten und Verdünnungsmitteln; und
anschließend Leiten der ersten Hydratisierungslösung zu einer zweiten Linse mit einer zweiten Konzentration von nicht-umgesetzten Komponenten und Verdünnungsmitteln, die höher ist als die erste Konzentration von nicht-umgesetzten Komponenten und Verdünnungsmitteln.

16. Verfahren nach Anspruch 15, wobei die polymerisationsinitiierenden Bedingungen aktinische Strahlung umfassen.

17. Verfahren nach Anspruch 15, wobei die polymerisiationsinitiierenden Bedingungen aktinische Strahlung und Wärme umfassen.

18. Verfahren nach Anspruch 15, wobei die erste Hydratisierungslösung und die zweite Hydratisierungslösung eine wässrige Lösung mit zwischen 61% und 70% Isopropylalkohol umfassen.

19. Verfahren zur Verarbeitung einer Augenlinse, die Silikon-Hydrogel umfasst, nach Anspruch 15, wobei das erste Formteil eine vordere Krümmung umfasst und das zweite Formteil eine hintere Krümmung umfasst und das Verfahren weiter die Schritte umfasst:
dass, im Anschluss an die Bildung der Linse, die vordere Krümmung von der hinteren Krümmung getrennt wird, wobei die ausgehärtete Linse lösbar an der vorderen Krümmung anhaftet; und
dass die vordere Krümmung der Form und die Linse einer Äquilibrierungslösung unterworfen werden, die entionisiertes Wasser umfasst.

20. Verfahren nach Anspruch 15, wobei das Aussetzen der Linse und des Formteils gegenüber einer ersten Hydratisierungslösung das Untertauchen der Linse und Form in der ersten Hydratisierungslösung umfasst.

21. Verfahren nach Anspruch 15, wobei das Aussetzen der Linse und des Formteils gegenüber einer zweiten Hydratisierungslösung das Untertauchen der Linse und Form in der zweiten Hydratsisierungslösung umfasst.

22. Verfahren nach Anspruch 15, das zusätzlich den Schritt der Positionierung der Form umfasst, so dass Schwerkraft wirkt, um die Trennung der Linse von der Formoberfläche zu erleichtern, während die Linse der wässrigen Lösung unterworfen wird.

23. Verfahren nach Anspruch 15, wobei, während die Linse der Hydratisierungslösung ausgesetzt wird, die Hydratisierungslösung bei einer Temperatur von zwischen 45°C bis 80°C gehalten wird.

24. Verfahren nach Anspruch 15, wobei, während die Linse der Hydratisierungslösung ausgesetzt wird, die Hydratisierungslösung bei einer Temperatur von zwischen 70°C bis 80°C gehalten wird.

25. Verfahren nach Anspruch 15, wobei die zweite Hydratisierungslösung zusätzlich eine oder mehrere der folgenden Verbindungen umfasst:
Polyoxyethylensorbitanmonooleat, Tyloxapol, Octylphenoxy(oxyethylen)ethanol, Amphother 10, Sorbinsäure, DYMED, Chlorhexadingluconat, Wasserstoffperoxid, Thimerosal, Polyquad und Polyhexamethylenbiguanid.

26. Automatisierte Vorrichtung zum Hydratisieren und Auslaugen einer Augenvorrichtung, umfassend:
a) eine Palette zum Transportieren eines oder mehrerer Linsenformteile, wobei jedes Formteil eine linsenbildende Oberfläche umfasst und angepasst ist, um eine linsenbildende Mischung zur Bildung einer Augenlinse aufzunehmen;
b) einen Abscheidungsmechanismus (301) zur Abscheidung einer linsenbildenden Mischung in die linsenbildende Oberfläche hinein;
c) eine Aushärtungsstation (302), die so arbeitet, dass die linsenbildende Mischung polymerisationsinitiierenden Bedingungen ausgesetzt wird, um die linsenbildende Mischung auszuhärten und eine erste Augenlinse zu bilden, wodurch bewirkt wird, dass die erste Linse an dem Formteil anhaftet;
d) eine Hydratisierungsstation (304), die so arbeitet, dass:
die Form und erste Augenlinse mit einer ersten Konzentration von nicht-umgesetzten Komponenten und Verdünnungsmitteln einer ersten Hydratisierungslösung, die 30% bis 70% Isopropylalkohol umfasst, für einen Zeitraum von 10 Minuten bis 60 Minuten ausgesetzt werden, bis die Linse weniger als 300 Teile pro Million nicht-umgesetzte Komponenten und Verdünnungsmittel umfasst und die Linse vom Formteil gelöst ist;
eine zweite Augenlinse mit einer zweiten Konzentration von nicht-umgesetzten Komponenten und Verdünnungsmitteln, die höher ist als die erste Konzentration von nicht-umgesetzten Komponenten und Verdünnungsmitteln, der ersten Hydratisierungslösung ausgesetzt wird; und
die Linse und das Formteil einer zweiten Hydratisierungslösung, die entionisiertes Wasser umfasst, ausgesetzt werden; und
e) eine Robotorüberführungseinheit (305) zur Überführung einer oder mehrerer Paletten und Linsenformteile von der Aushärtungsstation zur Hydratisierungsstation.

27. Automatisierte Vorrichtung nach Anspruch 26, die zusätzlich eine Vorrichtung (307) zur Erwärmung der ersten Hydratisierungslösung auf eine Temperatur von zwischen 30°C und 72°C umfasst.

28. Automatisierte Vorrichtung nach Anspruch 27, wobei die Vorrichtung (307) zur Erwärmung der ersten Hydratisierungslösung auf eine Temperatur von zwischen 30°C und 72°C eine Wärmeaustauscheinheit umfasst.

## Revendications

1. Procédé pour traiter une lentille ophtalmique comprenant de l'hydrogel à base de silicone, le procédé comprenant les étapes consistant à :
■ déposer (201) une résine de formation de lentille dans une partie de moule ;
■ faire durcir (203) la résine de formation de lentille afin de former une première lentille ophtalmique et amener la première lentille ophtalmique à adhérer sur la partie de moule ;
■ faire chauffer (205) une première solution d'hydratation composée de 30 % à 70 % d'IPA à une température comprise entre 30°C et 72°C ;
■ exposer (206) la première lentille ophtalmique à la première solution d'hydratation chauffée composée de 30 % à 70 % d'alcool isopropylique pendant une première période de temps comprise entre 10 et 60 minutes amenant la première lentille ophtalmique à se détacher de la partie de moule ;
■ faire chauffer une deuxième solution d'hydratation composée de 30 % à 70 % d'IPA à une température comprise entre 30°C et 72°C ;
■ exposer la première lentille ophtalmique à la deuxième solution d'hydratation chauffée composée de 30 % à 72 % d'IPA pendant une deuxième période de temps de 10 minutes à 60 minutes lixiviant les composants et les diluants inaltérés de la première lentille ophtalmique ; et
■ exposer (207) la première lentille à une troisième solution d'hydratation comprenant 100 % d'eau déminéralisée pendant une troisième période de temps de 10 minutes à 180 minutes rinçant la deuxième solution d'hydratation de la première lentille ; et comprenant en outre les étapes consistant à :
■ diriger la première solution d'hydratation dans un premier temps vers la première lentille ayant une première concentration de composants et de diluants inaltérés ; et
■ diriger ensuite la première solution d'hydratation vers une deuxième lentille ayant une deuxième concentration de composants et de diluants inaltérés qui est plus élevée que ladite première concentration de composants et de diluants inaltérés.

2. Procédé selon la revendication 1, dans lequel la première solution d'hydratation et la deuxième solution d'hydratation sont chauffées à une température comprise entre 30°C et 40°C.

3. Procédé selon la revendication 1, dans lequel la première solution d'hydratation et la deuxième solution d'hydratation sont chauffées à une température comprise entre 41°C et 50°C.

4. Procédé selon la revendication 1, dans lequel la première solution d'hydratation et la deuxième solution d'hydratation sont chauffées à une température comprise entre 51°C et 62°C.

5. Procédé selon la revendication 1, dans lequel la première solution d'hydratation et la deuxième solution d'hydratation comprennent une solution aqueuse comprenant entre 20 % et 30 % d'alcool isopropylique.

6. Procédé selon la revendication 1, dans lequel la première solution d'hydratation et la deuxième solution d'hydratation comprennent une solution aqueuse comprenant entre 31 % et 40 % d'alcool isopropylique.

7. Procédé selon la revendication 1, dans lequel la première solution d'hydratation et la deuxième solution d'hydratation comprennent une solution aqueuse comprenant entre 41 % et 50 % d'alcool isopropylique.

8. Procédé selon la revendication 1, dans lequel la première solution d'hydratation et la deuxième solution d'hydratation comprennent une solution aqueuse comprenant entre 51 % et 60 % d'alcool isopropylique.

9. Procédé selon la revendication 1, dans lequel la première période de temps et la deuxième période de temps comprennent une période comprise entre 10 minutes et 20 minutes chacune.

10. Procédé selon la revendication 1, dans lequel la première période de temps et la deuxième période de temps comprennent une période comprise entre 21 minutes et 30 minutes chacune.

11. Procédé selon la revendication 1, dans lequel la première période de temps et la deuxième période de temps comprennent une période comprise entre 31 minutes et 40 minutes chacune.

12. Procédé selon la revendication 1, dans lequel la première période de temps et la deuxième période de temps comprennent une période comprise entre 41 minutes et 50 minutes chacune.

13. Procédé selon la revendication 1, dans lequel la première période de temps et la deuxième période de temps comprennent une période comprise entre 51 minutes et 60 minutes chacune.

14. Procédé selon la revendication 1, dans lequel la troisième période comprend une période comprise entre 10 minutes et 30 minutes.

15. Procédé pour traiter une première lentille ophtalmique comprenant de l'hydrogel à base de silicone, le procédé comprenant les étapes consistant à :
■ déposer (201) une résine de formation de lentille sur une surface de formation de lentille d'une première partie de moule ;
■ amener le mélange de formation de lentille en contact avec une seconde surface de formation de lentille d'une seconde partie de moule, dans lequel la première partie de moule et la seconde partie de moule sont configurées pour se recevoir l'une l'autre de sorte qu'une cavité est formée entre la première surface de formation de lentille et la seconde surface de formation de lentille et dans lequel la cavité définit la forme de la première lentille ophtalmique ;
■ exposer (203) la résine de formation de lentille à des conditions d'initiation de polymérisation afin de former une première lentille à partir de la résine de lentille ;
■ exposer (206) la première lentille et la partie de moule à une première solution d'hydratation comprenant de 30 % à 70 % d'alcool isopropylique pendant une période de 10 minutes à 60 minutes jusqu'à ce que la première lentille comprenne une valeur inférieure à un seuil prédéterminé de 300 parties par million de composants et de diluants inaltérés ; et
■ exposer (207) la première lentille et la partie de moule à une deuxième solution d'hydratation comprenant de l'eau déminéralisée pour rincer la première solution d'hydratation de la première lentille ; et
comprenant en outre, les étapes consistant à :
■ diriger la première solution d'hydratation à la première lentille ayant une première concentration de composants et de diluants inaltérés ; et
■ diriger ensuite la première solution d'hydratation vers la seconde lentille ayant une seconde concentration de composants et de diluants inaltérés qui est supérieure à ladite première concentration de composants et de diluants inaltérés.

16. Procédé selon la revendication 15, dans lequel les conditions d'initiation de polymérisation comprennent le rayonnement actinique.

17. Procédé selon la revendication 15, dans lequel les conditions d'initiation de polymérisation comprennent le rayonnement actinique et de la chaleur.

18. Procédé selon la revendication 15, dans lequel la première solution d'hydratation et la deuxième solution d'hydratation comprennent une solution aqueuse comprenant entre 61 % et 70 % d'alcool isopropylique.

19. Procédé pour traiter une lentille ophtalmique comprenant de l'hydrogel à base de silicone selon la revendication 15, dans lequel la première partie de moule comprend une courbe avant et la seconde partie de moule comprend une courbe arrière, et le procédé comprend en outre les étapes consistant à :
■ suite à la formation de la lentille, séparer la courbe avant et la courbe arrière où la lentille durcie adhère de manière amovible à la courbe avant ; et
■ soumettre la courbe avant du moule et la lentille à une solution d'équilibre comprenant de l'eau déminéralisée.

20. Procédé selon la revendication 15, dans lequel l'étape consistant à exposer la lentille et la partie de moule à une première solution d'hydratation comprend l'étape consistant à immerger la lentille et le moule dans la première solution d'hydratation.

21. Procédé selon la revendication 15, dans lequel l'étape consistant à exposer la lentille et la partie de moule à une deuxième solution d'hydratation comprend l'étape consistant à immerger la lentille et le moule dans la deuxième solution d'hydratation.

22. Procédé selon la revendication 15, comprenant de plus l'étape consistant à positionner le moule de sorte que la gravité agit pour faciliter la séparation de la lentille de la surface de moule alors que la lentille est soumise à la solution aqueuse.

23. Procédé selon la revendication 15, dans lequel alors que la lentille est exposée à la solution d'hydratation, la solution d'hydratation est maintenue à une température comprise entre 45°C et 80°C.

24. Procédé selon la revendication 15, dans lequel alors que la lentille est exposée à la solution d'hydratation, la solution d'hydratation est maintenue à une température comprise entre 70°C et 80°C.

25. Procédé selon la revendication 15, dans lequel la deuxième solution d'hydratation comprend de plus un ou plusieurs éléments parmi : le monooléate de polyoxyéthylène sorbitanne, le Tyloxapol, l'octylphenoxy-éthoxyéthanol, l'amphotère 10, l'acide sorbique, le DYMED, le gluconate de chlorhexidine, le peroxyde d'hydrogène, le thimérosal, le Polyquad et le poly(hexaméthylène biguanide).

26. Appareil automatique pour hydrater et lixivier un dispositif ophtalmique comprenant :
a) une palette pour transporter une ou plusieurs parties de moule de lentille, chaque partie de moule comprenant une surface de formation de lentille et adaptée pour recevoir un mélange de formation de lentille afin de former une lentille ophtalmique ;
b) un mécanisme de dépôt (301) pour déposer un mélange de formation de lentille dans la surface de formation de lentille ;
c) une station de durcissement (302) fonctionnelle pour exposer le mélange de formation de lentille aux conditions d'initiation de polymérisation afin de faire durcir le mélange de formation de lentille et former une première lentille ophtalmique amenant la première lentille ophtalmique à adhérer sur la partie de moule ;
d) une station d'hydratation (304) fonctionnelle pour :
■ exposer le moule et la première lentille ophtalmique ayant une première concentration de composants et de diluants inaltérés à une première solution d'hydratation comprenant de 30 % à 70 % d'alcool isopropylique pendant une période de 10 minutes à 60 minutes jusqu'à ce que la lentille comprenne moins de 300 parties par million de composants et de diluants inaltérés et la lentille est détachée de la partie de moule ;
■ exposer une seconde lentille ophtalmique ayant une seconde concentration de composants et de diluants inaltérés qui est supérieure à ladite première concentration de composants et de diluants inaltérés à la première solution d'hydratation ; et
■ exposer la lentille et la partie de moule à une deuxième solution d'hydratation comprenant de l'eau déminéralisée ; et
e) un dispositif de transfert robotisé (305) pour transférer une ou plusieurs palettes et parties de moule de lentille de la station de durcissement à la station d'hydratation.

27. Appareil automatique selon la revendication 26, comprenant en outre, l'appareil (307) pour chauffer la première solution d'hydratation à une température comprise entre 30°C et 72°C.

28. Appareil automatique selon la revendication 27, dans lequel l'appareil (307) pour chauffer la première solution d'hydratation à une température comprise entre 30°C et 72°C comprend une unité d'échange de chaleur.
